# EUROPEAN PATENT SPECIFICATION

(11) **EP 3 397 463 B1**
(45) Date of publication and mention of the grant of the patent: **25.03.2020**
(21) Application number: 16834287.1
(22) Date of filing: 21.12.2016
(51) Int. Cl.: B29D 30/00, G01M 17/02

(54) **METHOD FOR MANAGING A TYRE CHECKING APPARATUS AND APPARATUS FOR TYRE CHECKING ADAPTED TO OPERATE ACCORDING TO SAID METHOD**
VERFAHREN ZUR VERWALTUNG EINER REIFENPRÜFVORRICHTUNG UND REIFENPRÜFVORRICHTUNG MIT BETRIEB NACH DIESEM VERFAHREN
PROCÉDÉ DE GESTION D'UN APPAREIL DE CONTRÔLE DE PNEU ET APPAREIL DE CONTRÔLE DE PNEU CONÇU POUR FONCTIONNER SELON CE PROCÉDÉ

(30) Priority: 28.12.2015 IT UB20159445
(43) Date of publication of application: 07.11.2018
(73) Proprietor: Pirelli Tyre S.p.A., 20126 Milano (IT)
(72) Inventor: BOFFA, Vincenzo, 20126 Milano (IT); REGOLI, Fabio, 20126 Milano (IT); BALLARDINI, Valeriano, 40026 Imola (BO) (IT); MONTI, Stefano, 40026 Imola (BO) (IT); TERSI, Luca, 40026 Imola (BO) (IT)
(74) Representative: Baroni, Matteo
(86) International application number: PCT/IB2016/057883
(87) International publication number: WO 2017/115230

(56) References cited:
- WO-A1-2014/097133
- DE-A1-102013 200 919
- FR-A1- 3 011 079
- US-A1- 2009 040 533
- US-A1- 2012 092 149
- US-A1- 2014 373 614

## Description

The present invention refers to a method for managing a tyre checking apparatus.

The present invention also refers to a tyre checking apparatus adapted to operate according to said method.

A tyre for vehicle wheels generally comprises a carcass structure comprising at least one carcass ply having respectively opposite end flaps engaged with respective annular anchoring structures, generally referred to as "bead cores", identified in the areas usually referred to as "beads", having an inner diameter substantially corresponding to a so-called "fitting diameter" of the tyre for fitting it on a respective mounting rim. The tyre further comprises a crown structure comprising a belt structure having at least one belt strip arranged in radially external position with respect to the carcass ply(ies) and a radially external tread band with respect to the belt strip(s). A so-called "underlayer" may be arranged between the tread band and the belt strip(s), made of elastomeric material of suitable properties for ensuring a steady union of the belt strip(s) with the tread band itself. Respective sidewalls of elastomeric material are further applied on the lateral surfaces of the carcass structure, each extending from one of the lateral edges of the tread band up to the respective annular anchoring structure to the beads. In "tubeless" tyres, the carcass ply is internally coated with a layer of elastomeric material, preferably a butyl based one, usually referred to as "liner" having optimal ait tightness properties and extending from one bead to another.

The terms "optical", "light" and the like refer to an electromagnetic radiation used that has at least a portion of the spectrum falling in a widened neighbourhood of the light band, and not necessarily strictly falling within the light band (i.e. 400 -700 nm), for example this widened neighbourhood of the light band may range from ultraviolet to infrared (for example, a wavelength of between about 100 nm and about 1 µm). The term "optical tool" is meant to indicate a unit comprising: a support adapted to allow the association between the optical tool and a member that is part of a tyre checking apparatus; at least one emitter device adapted to emit a light radiation, mounted on said support; at least one detector device adapted to detect such a light radiation, mounted on said support. In particular, the detector device is adapted to detect the light radiation emitted by the emitter device after such a radiation has interacted (e.g. according to reflection and/or diffusion phenomena) with a tyre to be checked.

The terms "use" or "employ" of an optical tool in a checking operation is meant to indicate the execution of a tyre checking operation based at least in part on the detection of light radiation by said optical tool.

The term "optical structure" is meant to indicate an assembly comprising one or more optical tools.

In the context of the production and building processes of tyres for vehicle wheels, it is suitable to perform quality checks on finished products, with the aim to prevent defective tyres from being put on the market, and/or to progressively adjust the apparatuses and machinery used so as to improve and optimise the execution of the operations carried out in the production process. These quality checks include for example those performed by human operators who dedicate a fixed time, such as between 30 s and 60 s, for a visual and tactile inspection of the tyre; if, in the light of his/her own experience and sensitivity, the operator were to suspect that the tyre does not meet certain quality standards, the same tyre is subjected to further checks, through a more detailed human check and/or suitable equipment in order to deepen the evaluation of any structural and/or qualitative deficiencies.

Document US 2014/373614 A1 discloses a tire inspection apparatus for the optical inspection of a tire comprises a housing with a support surface for the tire to be inspected; several measuring heads, each of which comprises an optical measuring system, for inspecting the inside tread surface and/or the external lateral surface of the tire; and a positioning device for moving some or all of the measuring heads into a rest position and into a measuring position.

Document DE 10 2013 200919 A1 discloses a device for measuring the profile of the tread of a tyre which comprises: a running surface, which is provided for the tyre to roll on and in which at least one measurement slot is formed; at least one illumination apparatus, which is formed and arranged in such a manner that during operation it projects a plurality of light lines through the measurement slot onto the profile to be measured; and at least one image capture apparatus, which is formed to capture at least one image of at least one region of the profile to be measured. At least one monitoring and calibration device is formed at at least one measurement slot, said monitoring and calibration device having at least one channel-shaped depression, which faces the illumination apparatus. The at least one depression is formed at an angle to the plane of the running surface (16), which is parallel to the direction of a light beam, which in the proper state is emitted by the illumination apparatus and is incident into the depression.

Document US 2009/040533 A1 discloses a tire shape measuring system that measures a surface shape on the basis of an image of a line of light (a light section line) emitted to a surface of a relatively rotating tire using a light-section method. The shape measuring system includes a light projector for emitting a plurality of lines of light onto a tire surface in directions different from a direction in which the height of the surface is detected so as to form a plurality of separate light section lines and a camera for capturing images of the light section lines in directions in which chief rays of the lines of light are specularly reflected by the tire surface. The shape measuring system individually detects the coordinates of the light section lines from images of pre-defined independent image processing target areas for each captured image and calculates the distribution of the surface height using the detected coordinates. Document EP 1120640 A1 describes an apparatus for examining the appearance and shape of a tyre, and in particular for assessing the quality of an inner surface of the tyre itself: the tyre is positioned on a turntable. A support structure keeps light emitters and cameras at the centre of the hollow portion of the tyre, so as to detect the features of interest. Document US 2012/0134656 A1 describes an illumination device and an inspection device for detecting defects in the shape of a tyre.

The Applicant has observed that apparatuses/devices of the type shown in EP 1120640 A1 and US 2012/0134656 A1 are based on the emission and detection of electromagnetic radiation, in particular light radiation. For the detection to be precise and reliable, the instruments used must be calibrated appropriately.

The Applicant has also observed that, due to several factors (e.g. fogging of the lens of an optical tool, malfunctions of the emitter device and/or of the detector device, undesired and uncontrolled movements of the emitter/detector devices with respect to the support, etc.), the operating conditions of the optical tools vary over time and change from their initial settings, which are assumed to be ideal or at least appropriate for carrying out the expected checks. This leads to lower accuracy and consistency in the measurements and, accordingly, to lower reliability of the checks performed.

The Applicant has therefore perceived that the optical tools should be checked periodically in order to identify and correct any problems arising during the system operation.

The Applicant, however, believes that it is preferable to check tyres substantially in line, i.e. substantially continuously downstream of the tyre production process. Therefore, in order to perform the above checks, it would be necessary to interrupt the checking activity, making the whole process lose efficiency.

The Applicant has also noted that these interruptions could have a particularly prolonged duration in the case of an apparatus provided with a plurality of optical tools, different from one another, which need to be checked.

The Applicant has therefore felt the need to find a technical solution that would make it possible to check the operation of the optical tools during the checking of the tyres, so as not to affect the performance timing of the checking operations.

The Applicant has observed that apparatus/devices of the type shown in EP 1120640 A1 and US 2012/0134656 A1 cannot provide any solution nor any suggestions with respect to this requirement. In fact, these documents do not refer to possible malfunctions of the optical tools and/or to the management of the performance timing of the checking process.

The Applicant has then noted that although the tyre checking operations may be performed, from a general point of view, with substantial continuity, time intervals are still present between one check and the subsequent one (typically, at the end of the check of a tyre, before starting checking the next tyre), during which the optical tools are not used.

The Applicant has also verified that these time intervals typically have a duration sufficient to allow checking the operating and/or calibration conditions of at least one optical tool.

The Applicant has therefore perceived that the same intervals may be used to check the optical tools without requiring interruptions dedicated to the checking activity.

More specifically, the Applicant has found that by conducting a check on at least one optical tool during an idle interval of the checking process, optionally moving said at least one optical tool in the proximity of a suitably arranged reference element, periodical checks of the various optical tools may be carried out without affecting in any way the performance timing of the whole process.

According to a first aspect thereof, the invention relates to a method for managing a tyre checking apparatus in accordance with independent claim 1.

The Applicant believes that in this way, the various optical tools forming part of the checking apparatus may be kept in suitable operating condition, and the checking process may therefore be carried out with continuity and, at the same time, with reliable results.

According to a second aspect thereof, the invention relates to a tyre checking apparatus in accordance with independent claim 12.

The present invention, in at least one of the above aspects thereof, can comprise one or more of the following preferred features described below. Preferably, in order to verify said first optical tool, provision is made to position said first optical tool in a given position relative to a reference element.

Advantageously, when the first optical tool is in said given position with respect to the reference element, said first optical tool faces toward said reference element.

Preferably, in order to verify said first optical tool, provision is made to detect, by said first optical tool, light radiations representative of at least a part of said reference element.

Preferably, in order to verify said first optical tool, provision is made to make a comparison between said detected light radiations and reference data.

Preferably, in order to verify said first optical tool, provision is made to generate a notification signal as a function of said comparison. Preferably, said reference element comprises a screen adapted to display predefined shapes for the execution of said verification.

Preferably, in order to position the first optical tool in said given position, provision is made to drive said first member in such a way that said first optical tool will be placed in said given position.

Preferably, provision is made to execute a learning operation for learning the position of said reference element.

Preferably, said learning operation is executed prior to the execution of said first check.

Preferably, said learning operation comprises driving said first member to bring it into a position such that said first optical tool will be placed in said given position relative to said reference element.

Preferably, for executing said learning operation, provision is made to manually drive said first member.

Preferably, said learning operation comprises storing position data, indicating the position taken by said first member, into a storage medium associated with said first member.

Preferably, in order to verify said first optical tool, provision is made to drive said first member into the position defined by said position data. Preferably, said first optical tool comprises at least one emitter device adapted to emit a light radiation.

Preferably, said first optical tool comprises at least one detector device adapted to detect said light radiation.

Preferably, said first optical tool comprises a support whereon said emitter device and said detector device are mounted.

Preferably, said optical structure comprises a second optical tool. Preferably, said second optical tool is not used for tyre checking during said time interval.

Preferably, provision is made to verify said second optical tool during said time interval.

Preferably, said first duration is comprised between about 15 seconds and about 120 seconds.

Preferably, said second duration is comprised between about 15 seconds and about 120 seconds.

Preferably, said first duration is substantially equal to said second duration.

Preferably, said processing unit is adapted to drive said first member for moving said first optical tool in order to verify said first optical tool. Preferably, a reference element is provided.

Preferably, said processing unit is adapted to drive said first member for positioning said first optical tool in a given position relative to said reference element in order to verify said first optical tool.

Preferably, said processing unit is adapted to verify said second optical tool during said time interval.

Further features and advantages will appear more clearly from the detailed description of a preferred and non-exclusive embodiment of the invention. This description is given hereinafter with reference to the accompanying figures, also provided only for illustrative and, therefore, non-limiting purposes, in which:
- figure 1 schematically shows a plant for building tyres for vehicle wheels;
- figure 2 show an enlarged elevation view of a tyre checking apparatus that is part of the plant in figure 1;
- figure 3 shows a perspective view of a station that is part of the apparatus in the previous figures;
- figure 4 shows shapes that may be used by the apparatus according to the invention;
- figure 5 shows an optical tool that is part of the apparatus according to the invention;

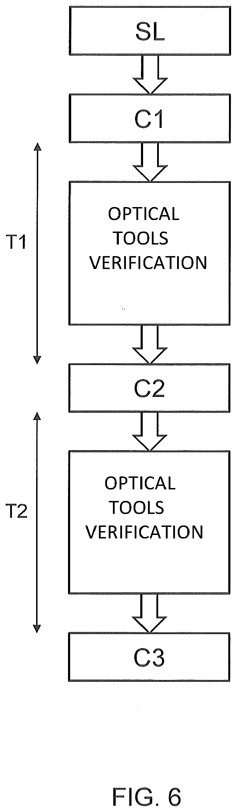

- figure 6 shows a flow chart representative of operations carried out in the method according to the invention;
- figure 7 shows a block diagram representative of some parts of the apparatus according to the invention.

With reference to the accompanying figures, reference numeral 1 identifies a tyre checking apparatus according to the present invention. Apparatus 1 may be placed downstream of a tyre production line, so as to check said tyres after moulding and vulcanisation.

In addition or alternatively, apparatus 1 may operate at the end of the building and before the moulding and vulcanisation step.

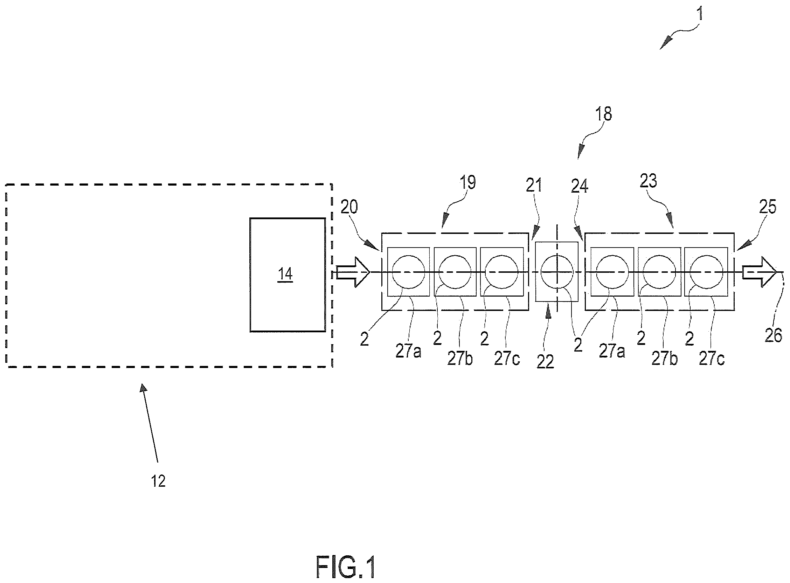

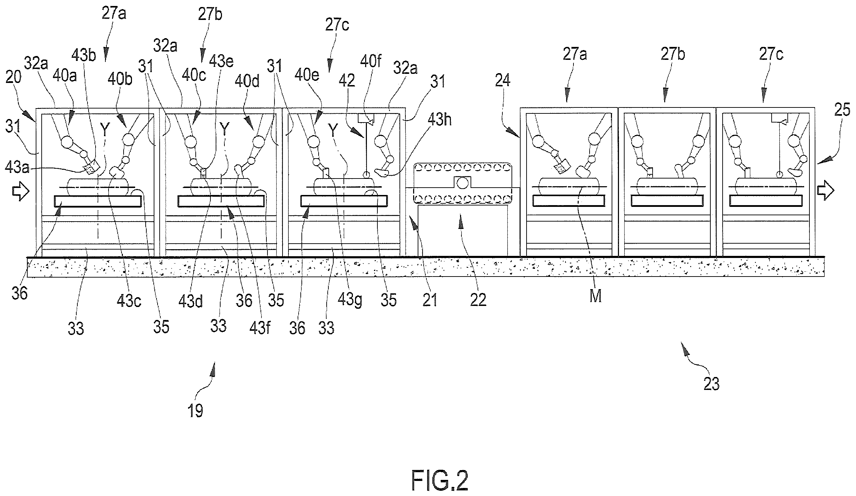

In the embodiments in figures 1 and 2, the tyre checking apparatus 1 placed downstream of the moulding and vulcanisation unit 14, comprises a first checking unit 19 which has an inlet 20 for the finished tyres 2 to be checked coming from the production line 12 and a respective outlet 21. An overturning and transport device 22 is placed downstream of the first checking unit 19, at outlet 21 of said first checking unit 19. Downstream of the overturning and transport device 22 is a second checking unit 23, which has an inlet 24 for the finished tyres 2 coming from the overturning and transport device 22 and a respective outlet 25. Inlet 20 of the first checking unit 19 is the inlet of the tyre checking apparatus 1. Outlet 25 of the second checking unit 23 is the outlet of the tyre checking apparatus 1. Tyres 2 to be checked enter one after the other in a sequence into inlet 20, sequentially travel along a checking path 26 within the tyre checking apparatus 1 and exit through outlet 25. Along the checking path 26, which in the embodiment shown in figures 1 and 2 is straight, tyres 2 are subjected to quality checks in order to verify the possible presence of defects according to procedures that will be described hereinafter.

The first checking unit 19 comprises a first checking station 27a, a second checking station 27b and a third checking station 27c placed in a sequence one after the other along the checking path 26.

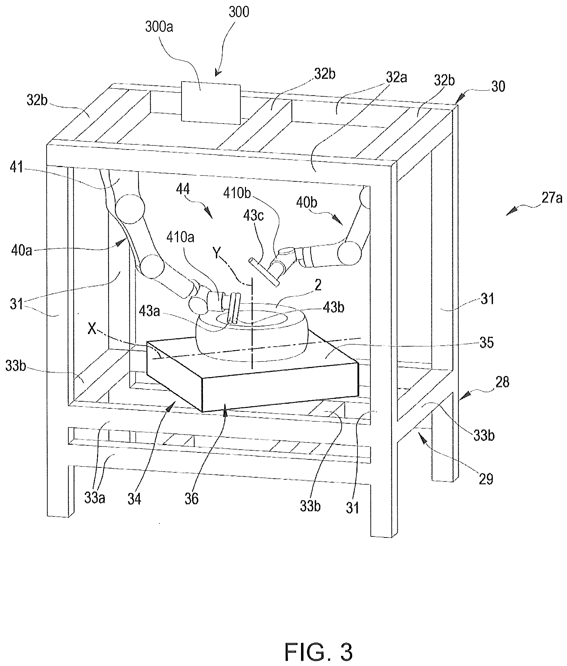

Each of said checking stations 27a, 27b, 27c comprises (figure 3 showing the first checking station 27a) a frame 28 having a lower portion 29 configured to be rested on the floor and an upper portion 30 extending above the lower portion 29. Frame 28 shown is a frame consisting of four vertical uprights 31 arranged, in plan view, at the vertices of a square or rectangle. The vertical uprights 31 are superiorly connected, at the upper portion 30, by a pair of upper longitudinal crosspieces 32a (oriented parallel to the checking path 26) and by a plurality of upper transverse crosspieces 32b (oriented perpendicular to the checking path 26).

The same vertical uprights 31 are inferiorly connected, at the lower portion 29, by a plurality of lower longitudinal crosspieces 33a and by a plurality of lower transverse crosspieces 33b.

The lower crosspieces 33a, 33b carry a support 34 defined by a turntable which has a substantially horizontal resting area 35 configured to receive and support a sidewall of the finished tyre 2 to be checked. Such a resting area of 35 may be defined by the upper branch of a conveyor belt, not shown in detail in the accompanying figures, that is part of support 34. The conveyor belt defines a transfer device 36 of tyres 2 from a checking station 27a, 27b, 27c to a subsequent checking station 27b, 27 c of the same checking unit 19, 23 or to the overturning and transport device 22. More in detail, in the embodiment outlined in figure 3, support 34 comprises a turntable hinged to the lower portion 29 around a vertical rotation axis "Y". The turntable is preferably associated to the conveyor belt which during the translation movement thereof defines a transport direction "X".

In a different embodiment, not shown, in place of the conveyor belt there may be multiple motor-driven rollers on which tyre 2 rests directly. Preferably, apparatus 1 comprises one or more members 40a, 40b, 40d, 40e, 40f, 40c, useful for moving optical tools (which are described hereinafter).

Each of members 40a, 40b, 40d, 40e, 40f, 40c may preferably be implemented as an anthropomorphic robotic arm. Even more preferably, each anthropomorphic robotic arm may have at least 5 axes/degrees of freedom.

For example, each checking station 27a, 27b, 27c may comprise a pair of members. In particular, the first station 27a may comprise a first member 40a and a second member 40b; the second station 27b may comprise a third member 40c and a fourth member 40d; the third station 27c may comprise a fifth member 40e and a sixth member 40f.

For simplicity, only the first member 40a and the second member 40b of the first station 27a are described hereinafter; in any case, the following description also applies to the members that are part of the second station 27b and of the third station 27c.

The first member 40a and the second member 40b are mounted above support 34 and constrained to the upper transverse crosspieces 32b. Each said members 40a, 40b, has a base portion 41 thereof jointed to the upper transverse crosspieces 32b and a series of segments arranged consecutively, starting from the base portion 41 and connected by joints. Each member 40a, 40b is cantilevered from the upper transverse crosspieces 32b above the resting area 35. In the embodiment shown, the two base portions 41 of members 40a, 40b are mounted at opposite longitudinal ends of the upper longitudinal crosspieces 32a and at opposite edges of frame 28. Said base portions 41 therefore do not lie directly above support 34 but are moved at opposite sides of the same.

A terminal end of each member 40a, 40b carries one or more optical tools 43a, 43b, 43c.

Between the resting area 35 and said upper transverse crosspieces 32b, frame 28 delimits a manoeuvring space 44 for members 40a, 40b and for the respective optical tools. Members 40a, 40b define support and movement devices of the optical tools 43a, 43b, 43c.

The first checking station 27a, the second checking station 27b and the third checking station 27c have the same structure described above apart from the type of optical tools 43a, 43b, 43c, 43d, 43e, 43f, 43g, 43h carried by the respective members 40a, 40b, 40c, 40d, 40e, 40f.

By way of example, the first member 40a of the first checking station 27a carries a first optical tool 43a comprising a first digital camera and a light source, for example LED, adapted to illuminate the portion of tyre 2 shot by the first digital camera with diffused and/or direct light substantially as the optical axis of the first camera or with grazing and/or direct light inclined with respect to the optical axis of said first camera. The same first member 40a further carries a second optical tool 43b comprising a second camera and a direct laser light inclined with respect to the optical axis of said second camera, so as to highlight particular profiles of tyre 2, for example on the radially inner portion of the crown structure or on the radially outer portion of the sidewall.

The second member 40b of the first checking station 27a carries a single third optical instrument 43c comprising a third digital camera and a light source distanced from the third camera (for example by means of a special mount) and oriented according to an angle preferably of between about 60° and about 100°, for example of about 90° with respect to the optical axis of said third camera, so as to project a grazing light on tyre 2 able to highlight relief defects of tyre 2 itself, such as cords emerging between the blocks of the tread band. The same optical tool 43c preferably comprises a low resolution scanner, so as to scan particular profiles of tyre 2, such as the radially inner portion of the crown structure. The third member 40c belonging to the second checking station 27b carries a fourth optical tool 43d similar or identical to the first optical tool 43a and comprising a fourth digital camera and a light source adapted to illuminate the portion of tyre 2 shot by the fourth digital camera with diffused and/or direct light substantially as the optical axis of the fourth camera or with grazing and/or direct light inclined with respect to the optical axis of said fourth camera. The same third member 40c further carries a fifth optical tool 43e comprising a fifth camera and a direct laser light inclined with respect to the optical axis of said fifth camera, so as to highlight particular profiles of tyre 2, for example the radially outer portion of the tread band or of the bead.

The fourth member 40d belonging to the second checking station 27b carries a single sixth optical tool 43f comprising a sixth camera and a direct laser light inclined with respect to the optical axis of said sixth camera, so as to highlight particular profiles of tyre 2, for example of the sidewall. The sixth optical tool 43f further comprises a mirror that intercepts the optical axis of the sixth camera to frame radially inner portions of tyre 2, for example corresponding to sidewall 11, or related to the shoulder or the bead. Said mirror also intercepts the laser light, thereby projecting it towards the framed field.

The fifth member 40e belonging to the third checking station 27c carries a single seventh optical tool 43g similar or identical to the first optical tool 43a and comprising a seventh digital camera and a light source adapted to illuminate the portion of tyre 2 shot by the seventh digital camera with diffused and/or direct light substantially as the optical axis of the seventh camera or with grazing and/or direct light inclined with respect to the optical axis of said seventh camera.

The sixth member 40f belonging to the third checking station 27c carries an eighth optical tool 43h also similar or identical to the first optical tool 43a and comprising an eighth digital camera and a light source adapted to illuminate the portion of tyre 2 shot by the eighth digital camera with diffused and/or direct light substantially as the optical axis of the eighth camera or with grazing and/or direct light inclined with respect to the optical axis of said eighth camera. Said eighth optical tool 43h further comprises a mirror that intercepts the optical axis of the eighth camera to frame radially inner portions of tyre 2.

The second checking unit 23 also comprises a first checking station 27a, a second checking station 27b and a third checking station 27c placed in a sequence one after the other along the checking path 26. Said checking stations 27a, 27b, 27c of the second checking unit 23 are identified by the same reference numerals as the checking stations 27a, 27b, 27c of the first checking unit 19 as they are substantially identical to said checking stations 27a, 27b, 27c of the first checking unit 19 (including the optical tools 43a, 43b, 43c, 43d , 43e, 43f, 43g, 43h). Therefore, they will not be described in detail again.

The optical tools 43a, 43b, 43c, 43d, 43e, 43f, 43g, 43h, forming part of the tyre checking apparatus 1 form an optical structure indicated, in the accompanying figures, by the reference numeral 430. The optical structure 430 therefore comprises one or more optical tools 43a, 43b, 43c, 43d, 43e, 43f, 43g, 43h.

In general, each optical tool 43a, 43b, 43c, 43d, 43e, 43f, 43g, 43h comprises: at least one emitter device 220 adapted to emit a light radiation; at least one detector device 230 adapted to detect said light radiation; a support 210, on which said emitter device 220 and said detector device 230 are mounted.

By way of example, as described above, the detector device 230 may be a digital camera. Preferably, the emitter device 220 may be a light source, for example LED, adapted to illuminate the portion of tyre 2 shot d by said digital camera.

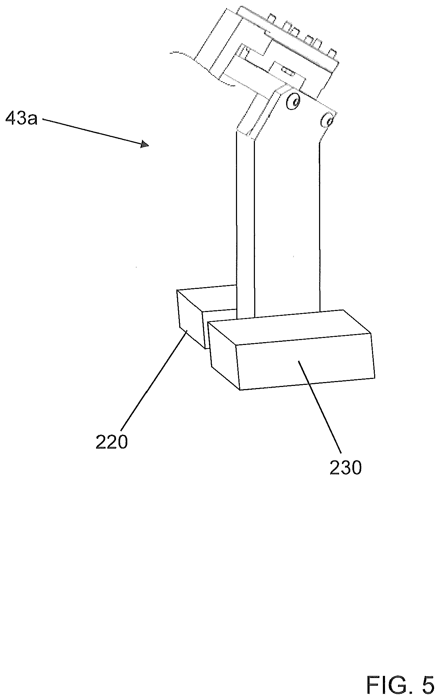

Figure 5 shows, by way of example, the first optical tool 43a, in which the emitter device 220 and the detector device 230 are highlighted.

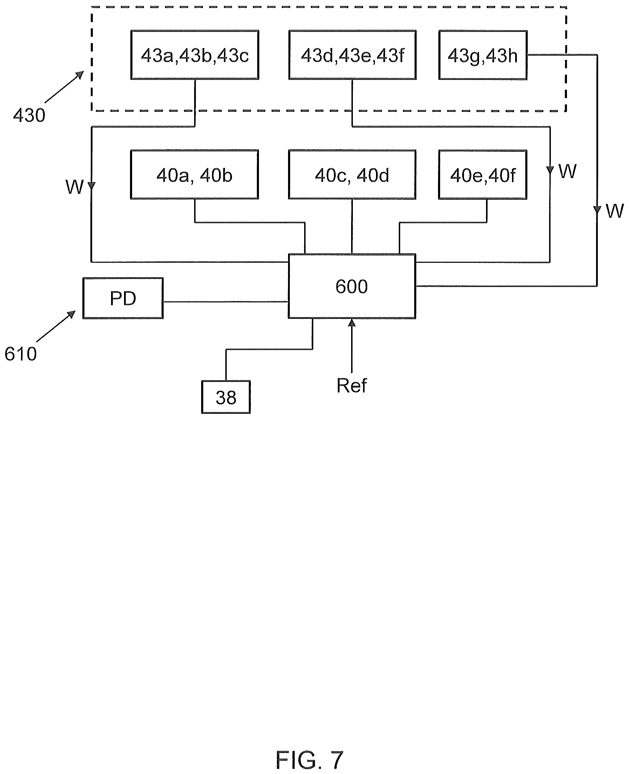

The tyre checking apparatus 1 is further provided with a processing unit 600 (figure 7).

Preferably, the processing unit 600 is operatively connected to members 40a, 40b, 40c, 40d, 40e, 40f of the first checking unit 19 and of the second checking unit 23, to the optical tools 43a, 43b, 43c, 43d, 43e , 43f, 43g, 43h, to motors 38 which allow the rotation of supports 34, to the motors that move the conveyor belts to the possible further optical tools and to any sensors that are part of apparatus 1 itself, to the motors of the overturning and transport device 22.

The processing unit 600 may be the same electronic management unit of the entire plant in which apparatus 1 works, or it may be operatively connected to one or more other units dedicated to other parts of the plant itself.

The processing unit 600 manages the operation of the tyre checking apparatus 1 preferably in coordination with the production line 12 located upstream.

According to the invention, the processing unit 600 is adapted to drive the optical structure 430 to execute at least a first sequence of checks executed on a first tyre in a first duration, followed by a second sequence of checks executed on a second tyre in a second duration.

Preferably, said first duration is comprised between about 15 seconds and about 120 seconds, even more preferably between about 20 seconds and about 60 seconds.

Preferably, said second duration is comprised between about 15 seconds and about 120 seconds, even more preferably between about 20 seconds and about 60 seconds.

Said first duration may be equal to said second duration.

Said first sequence of checks comprises at least a first check C1 on said first tyre.

The first check C1 is carried out by one or more of the optical tools 43a, 43b, 43c, 43d, 43e, 43f, 43g, 43h, forming part of the optical structure 430.

Such one or more optical tools 43a, 43b, 43c, 43d, 43e, 43f, 43g, 43h are moved through the respective members 40a, 40b, 40c, 40d, 40e, 40f and are moved to positions suitable for emitting and detecting the radiations necessary for the collection of data representative of said first tyre.

By way of example, the first optical tool 43a and the second optical tool 43b, mounted on the first member 40a, and the third optical tool 43c, mounted on the second member 40b, may be used in the first check C1. Preferably, in general, optical tools are used in the first check C1 which belong to a same checking station, for example the first checking station 27a.

The processing unit 600 is also adapted to drive the optical structure 430 to execute a second check C2 on said first tyre or said second tyre.

Said second check C2 may in fact belong to said first sequence of checks on said first tyre or said second sequence of checks on said second tyre. The second check C2 may involve the same optical tools and the same members C1 of the first check, or it may involve different optical tools and/or members.

By way of example, the first and the second optical tool 43a, 43b mounted on the first member 40a, and the third optical tool 43c, mounted on the second member 40b, may be used in the second check C2. Preferably, in general, optical tools are used in the second check C2 which belong to a same checking station, for example the first checking station 27a.

The first check C1 and the second check C2 are separated by a time interval T1.

The time interval T1 is preferably a time interval in which the checking station that executes the first check C1 and/or the second check C2 does not execute any checking of tyres.

In other words, during the time interval T1, all the optical tools used in the first check C1 and/or in the second check C2 are not used to execute any check.

In a different embodiment, during the time interval T1, one or more of the optical tools used in the first check C1 and/or in the second check C2 are used for further checks. In other words, the time interval T1 does not coincide with a period of complete inactivity of a checking station, but comprises a period of time in which some optical tools are used for checking tyres, while other optical tools are not used for checking tyres.

Said time interval T1 is less than or equal to the sum of said first duration and said second duration.

At least the first optical tool 43a is not used for tyre checking during the time interval T1.

Preferably, this means that the checking station of which the first optical device 43a is part (thus, for example, the first checking station 27a) does not execute checks of tyres during the time interval T1, or that the first checking station 27a executes checks in the time interval T1 but without using the first optical tool 43a.

Advantageously, the processing unit 600 is adapted to verify the first optical tool 43a during the time interval T1, or in a time interval comprised within the total duration of the sequence of checks executed on the first tyre and possibly executed also on the second tyre.

In this way, the first optical tool 43a may be verified without a negative impact on the operation of the first optical tool 43a itself and/or on the first checking station 27a.

Preferably, the processing unit 600 drives at least the first member 40a to move the first optical tool 43a to verify the first optical tool 43a itself. The first optical tool 43a may then be moved to a suitable position to be verified.

Apparatus 1 conveniently comprises a reference element 300, used to verify at least the first optical tool 43a.

The reference element 300 may be implemented as a screen 300a, on which reference shapes are displayed to execute the check of the first optical tool 43a.

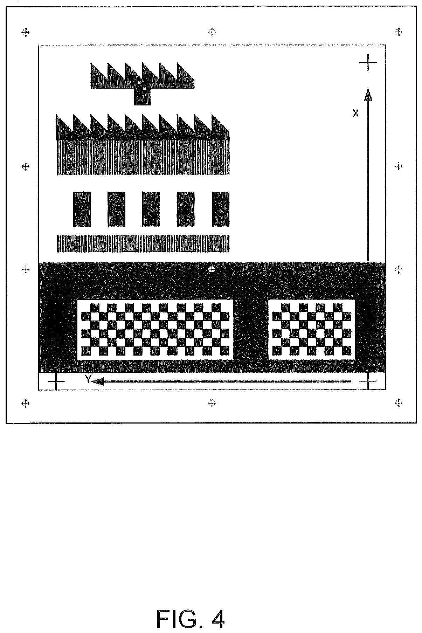

Figure 4 schematically shows some shapes that may be represented/displayed on the reference element 300.

The processing unit 600 is therefore adapted, to execute the check the first optical tool 43a, to drive the first member 40a to move said first optical tool 43a in order to place the latter in a given position, e.g. facing, with respect to the reference element 300.

As schematically shown in figure 3, the reference element 300 is preferably mounted on frame 28, and in particular on one of the upper longitudinal crosspieces 32a.

More in general, the reference element 300 may also be mounted in a different position, provided that the latter can be reached by the optical tools 43a, 43b, 43c through the respective members 40a, 40b. Preferably, the time interval T1 may be used to also check the second optical tool 43b.

As shown in the exemplary embodiment described above, the second optical tool 43b may be mounted on the same first member 40a on which the first optical tool 43a is mounted. In a different embodiment, the second optical tool 43b is mounted on a member other than said first member 40a.

Preferably, the first and second optical tool 43a, 43b are part of the same checking station, e.g. said first checking station 27a.

The second optical tool 43b is not used for tyre checking during the time interval T1. The second optical tool 43b may instead be used, for example, for the first check C1 and/or for the second check C2.

The processing unit 600 is then configured to verify also the second optical tool 43b during the time interval T1.

Preferably, the way in which the check is executed on the second optical tool 43b is the same as for the first optical tool 43a.

Preferably, the second optical tool 43b is positioned in the given position relative to the reference element 300 by driving the respective member (be it the first member 40a or a different member).

Preferably, the checks on the optical tools 43a, 43b, 43c are executed sequentially. For example, the first optical tool 43a is first placed in the given position relative to the reference element 300, and the check us executed on the first optical tool 43a. The first optical tool 43a is then removed, and the second optical tool 43b is positioned in a given position relative to the reference element 300. The check is then executed on the second optical tool 43b. The second optical tool 43b is then removed and the third optical tool 43c is positioned correctly, so as to check also the latter.

The check executed on the first optical tool 43a is described hereinafter. It is noted that checks executed on other optical tools, such as the second optical tool 43b, are executed substantially in the same way.

When the first optical tool 43a is in the given position relative to the reference element 300, light radiations W are detected by means of the first optical tool 43a itself which are representative of at least part of the reference element 300.

Preferably, the detector device 230 of the first optical element 43 is used to detect such light radiations W.

Preferably, the emitter device 220 of the first optical element 43a is also used: such an emitter device 220 generates radiations that are directed toward the reference element 300 and, by interacting with the reference element 300 itself, for example based on reflections and/or diffusion phenomena, they in turn generate the light radiations W.

In any case, it is contemplated that the reference element 300 may be backlit and may therefore eliminate the need to use the emitter device 300 for the check.

In practical terms, the light radiations W can be detected as images, representative of at least a portion of the reference element 300.

The light radiations W are compared with reference data Ref and, according to this comparison, a notification signal NS is generated. Advantageously, the comparison between the light radiations W and the reference data Ref is executed by the above processing unit 600.

The comparison between the light radiations W and the reference data Ref aims to verify that what is detected by the first optical tool 43a corresponds to a predefined representation, determined in advance, of the reference element 300. In other words, the reference data Ref represent what is expected to be detected by the first optical tool 43a.

If there is a significant difference between the light radiations W (or the images defined thereby) and the reference data Ref, the notification signal NS will indicate this discrepancy, so that an operator can intervene.

In case of presence of this discrepancy, preferably it is contemplated that the results regarding tyre 2 being checked are not deemed as valid.

The intervention will therefore consist in correcting the calibration of the first optical tool 43a, or replacing the latter with a similar tool, properly calibrated.

If the measurements of the first optical tool 43a are in line with what expected, the notification signal NS may not be generated, or it may indicate that the tool works properly.

As mentioned, the same checking procedures may be used for the second optical tool 43b.

Preferably, all the optical tools 43a, 43b, 43c that are part of the first checking station 27a are verified during the time interval T1, in particular according to the criteria described above.

With reference to the example of the first checking station 27a described above, the first optical tool 43a, the second optical tool 43b and also the third optical tool 43c may be checked in the time interval T1.

In this way, when a period of inactivity occurs between successive checking operations on said first tyre or between the check on said first tyre and the check on said second tyre, all the optical tools 43a, 43b, 43c that are part of the first checking station 27a can be checked.

Preferably, before executing the checks on the optical tools 43a, 43b, 43c, a learning operation SL is carried out.

The learning operation SL allows apparatus 1 to know and store the position of the reference element 300.

In particular, the learning operation SL is carried out before executing the first check C1.

In order to carry out the learning operation SL, the first member 40a is driven to bring the latter into a position such that the first optical tool 43a will be placed in the given position relative to the reference element 300. Preferably, in order to carry out this operation, the first member 40a is manually driven.

In practical terms, an operator acts, using a suitable interface, with the first member 40a and drives it so as to face the first optical tool 43a to the reference element 300.

When the first optical tool 43a is in the correct position, positioning data PD are stored in a storage medium 610 associated with the first member 40a. The positioning data PD are indicative of the position taken by the first member 40a when the first optical tool 43a is in the given position relative to the reference element 300.

The storage medium 610 is advantageously associated with the above processing unit 600. The storage medium 610 may be part of one or more memory areas to which the processing unit 600 accesses during its operation.

The positioning data storage may be activated by the operator who, once the first optical tool 43a and thus the first member 40a have been positioned correctly, communicates through the above user interface (for example, by pressing a button to confirm) that the current position of the first member 40a should be saved.

Once the positioning data have been stored, they are then used to execute the check of the first optical tool 43a: when the latter must be checked, the processing unit 600 reads the positioning data PD from the storage medium 610 and drives the first member 40a as to bring it in the position defined by the positioning data PD themselves. In this way, the first optical tool 43a is correctly positioned in front of the reference element 300 and by detecting images W, it can be checked.

It is noted that similar information relating to the positioning of the other optical tools and/or other members may be stored in advance, carrying out operations similar to the above learning operation SL.

The above description substantially relates only to the first checking station 27a. As mentioned, totally similar operations may also be carried out on the remaining second checking station 27b and third checking station 27c, both of the first checking unit 19 and of the second checking unit 23.

## Claims

1. Method for managing a tyre checking apparatus, said apparatus (1) comprising:
an optical structure (430) for said checking, said optical structure (430) comprising at least one first optical tool (43a);
a first member (40a) adapted to move said first optical tool (43a),
wherein said tyre checking comprises at least a first sequence of checks executed on a first tyre in a first duration, followed by a second sequence of checks executed on a second tyre in a second duration,
wherein said method comprises:
executing, through said optical structure (430), a first check (C1) on said first tyre;
executing, through said optical structure (430), a second check (C2) on said first or second tyre;
wherein said first check (C1) and said second check (C2) are separated by a time interval (T1) shorter than or equal to the sum of said first duration and second duration;
wherein said first optical tool (43a) is not used for tyre checking during said time interval (T1);
wherein said method comprises verifying said first optical tool (43a) during said time interval (T1).

2. Method according to claim 1, wherein verifying said first optical tool (43a) comprises:
positioning said first optical tool (43a) in a given position relative to a reference element (300);
detecting, through said first optical tool (43a), light radiations (W) representative of at least a part of said reference element (300);
making a comparison between said detected light radiations (W) and reference data (Ref);
generating a notification signal (NS) as a function of said comparison.

3. Method according to claim 2, wherein said reference element (300) comprises a screen (300a) adapted to display predefined shapes for the execution of said verification.

4. Method according to claim 2 or 3, wherein positioning the first optical tool (43a) in said given position comprises driving said first member (40a) in such a way that said first optical tool (43a) will be placed in said given position.

5. Method according to any one of claims 2 to 4, comprising executing a learning operation (SL) for learning the position of said reference element (300) prior to the execution of said first check (C1).

6. Method according to claim 4 and 5, wherein said learning operation (SL) comprises:
driving said first member (40a) to bring it into a position such that said first optical tool (43a) will be placed in said given position relative to said reference element (300);
storing position data (PD), indicating the position taken by said first member (40a), into a storage medium (610) associated with said first member (40a).

7. Method according to claim 6, wherein, for verifying said first optical tool (43a), said first member (40a) is driven into the position defined by said position data (PD).

8. Method according to any one of the preceding claims, wherein said optical structure (430) comprises a second optical tool (43b),
wherein said second optical tool (43b) is not used for tyre checking during said time interval (T1);
said method comprising verifying said second optical tool (43b) during said time interval (T1).

9. Method according to any one of the preceding claims, wherein said first duration is comprised between approximately 15 seconds and approximately 120 seconds.

10. Method according to any one of the preceding claims, wherein said second duration is comprised between approximately 15 seconds and approximately 120 seconds.

11. Method according to any one of the preceding claims, wherein said first duration is substantially equal to said second duration.

12. Tyre checking apparatus, comprising:
an optical structure (430) for executing one or more checks on tyres (2), said optical structure (430) comprising at least one first optical tool (43a);
a first member (40a) adapted to move said first optical tool (43a);
a processing unit (600) adapted to:
execute at least a first sequence of checks on a first tyre in a first duration, followed by a second sequence of checks executed on a second tyre in a second duration;
drive said optical structure (430) in order to execute a first check (C1) on said first tyre;
drive said optical structure (430) in order to execute a second check (C2) on said second tyre;
wherein said first check (C1) and said second check (C2) are separated by a time interval (T1) shorter than or equal to the sum of said first duration and second duration;
wherein said first optical tool (43a) is not used for tyre checking during said time interval (T1);
wherein said processing unit (600) is adapted to verify said first optical tool (43a) during said time interval (T1).

13. Apparatus according to claim 12, wherein said processing unit (600) is adapted to drive said first member (40a) for moving said first optical tool (43a) in order to verify said first optical tool (43a).

14. Apparatus according to claim 13, comprising a reference element (300), said processing unit (600) being adapted to drive said first member (40a) for positioning said first optical tool (43a) in a given position relative to said reference element (300) in order to verify said first optical tool (43a).

15. Apparatus according to any one of claims 12 to 14, wherein said optical structure comprises a second optical tool (43b),
wherein said second optical tool (43b) is not used for checking during said time interval (T1),
wherein said processing unit (600) is adapted to verify said second optical tool (43b) during said time interval (T1).

## Patentansprüche

1. Verfahren zum Verwalten einer Reifenüberprüfungsvorrichtung, wobei die Vorrichtung (1) umfasst:
einen optischen Aufbau (430) für die Überprüfung, wobei der optische Aufbau (430) zumindest ein erstes optisches Werkzeug (43a) umfasst;
ein erstes Glied (40a), das dazu geeignet ist, das erste optische Werkzeug (43a) zu bewegen,
wobei das Überprüfen des Reifens zumindest eine erste Abfolge von Überprüfungen, die an einem ersten Reifen in einer ersten Zeitdauer ausgeführt werden, gefolgt von einer zweiten Abfolge von Überprüfungen, die an einem zweiten Reifen in einer zweiten Zeitdauer ausgeführt werden, umfasst, wobei das Verfahren umfasst:
Ausführen einer ersten Überprüfung (C1) an dem ersten Reifen durch den optischen Aufbau (430);
Ausführen einer zweiten Überprüfung (C2) an dem ersten oder dem zweiten Reifen durch den optischen Aufbau (430);
wobei die erste Überprüfung (C1) und die zweite Überprüfung (C2) durch ein Zeitintervall (T1) getrennt sind, das kürzer als oder gleich der Summe der ersten Zeitdauer und der zweiten Zeitdauer ist;
wobei das erste optische Werkzeug (43a) während des Zeitintervalls (T1) nicht für die Überprüfung von Reifen verwendet wird;
wobei das Verfahren das Verifizieren des ersten optischen Werkzeugs (43a) während des Zeitintervalls (T1) umfasst.

2. Verfahren nach Anspruch 1, wobei das Verifizieren des ersten optischen Werkzeugs (43a) umfasst:
Positionieren des ersten optischen Werkzeugs (43a) in einer gegebenen Position relativ zu einem Referenzelement (300);
Erfassen von Lichtstrahlungen (W), die zumindest einen Teil des Referenzelements (300) darstellen, durch das erste optische Werkzeug (43a);
Herstellen eines Vergleichs zwischen den erfassten Lichtstrahlungen (W) und Referenzdaten (Ref);
Erzeugen eines Benachrichtigungssignals (NS) als eine Funktion des Vergleichs.

3. Verfahren nach Anspruch 2, wobei das Referenzelement (300) einen Bildschirm (300a) umfasst, der dazu geeignet ist, vordefinierte Gestalten für die Ausführung der Verifizierung anzuzeigen.

4. Verfahren nach Anspruch 2 oder 3, wobei das Positionieren des ersten optischen Werkzeugs (43a) in die gegebene Position das Antreiben des ersten Glieds (40a) auf solche Weise umfasst, dass das erste optische Werkzeug (43a) in der gegebenen Position platziert wird.

5. Verfahren nach einem der Ansprüche 2 bis 4, umfassend das Ausführen eines Lernvorgangs (SL), um die Position des Referenzelements (300) zu erlernen, vor der Ausführung der ersten Überprüfung (C1).

6. Verfahren nach Anspruch 4 und 5, wobei der Lernvorgang (SL) umfasst:
Antreiben des ersten Glieds (40a), um es in eine solche Position zu bringen, dass das erste optische Werkzeug (43a) in der gegebenen Position relativ zu dem Referenzelement (300) platziert wird;
Speichern von Positionsdaten (PD), die auf die von dem ersten Glied (40a) eingenommene Position hinweisen, in einem Speichermedium (610), das dem ersten Glied (40a) zugeordnet ist.

7. Verfahren nach Anspruch 6, wobei zum Verifizieren des ersten optischen Werkzeugs (43a) das erste Glied (40a) in die Position angetrieben wird, die durch die Positionsdaten (PD) definiert wird.

8. Verfahren nach einem der vorhergehenden Ansprüche, wobei der optische Aufbau (430) ein zweites optisches Werkzeug (43b) umfasst, wobei das zweite optische Werkzeug (43b) während des Zeitintervalls (T1) nicht für die Überprüfung von Reifen verwendet wird;
wobei das Verfahren das Verifizieren des zweiten optischen Werkzeugs (43b) während des Zeitintervalls (T1) umfasst.

9. Verfahren nach einem der vorhergehenden Ansprüche, wobei die erste Zeitdauer zwischen ungefähr 15 Sekunden und ungefähr 120 Sekunden beträgt.

10. Verfahren nach einem der vorhergehenden Ansprüche, wobei die zweite Zeitdauer zwischen ungefähr 15 Sekunden und ungefähr 120 Sekunden beträgt.

11. Verfahren nach einem der vorhergehenden Ansprüche, wobei die erste Zeitdauer im Wesentlichen gleich der zweiten Zeitdauer ist.

12. Vorrichtung zur Überprüfung von Reifen, umfassend:
einen optischen Aufbau (430) zum Ausführen einer oder mehrerer Überprüfungen an Reifen (2), wobei der optische Aufbau (430) zumindest ein erstes optisches Werkzeug (43a) umfasst;
ein erstes Glied (40a), das dazu geeignet ist, das erste optische Werkzeug (43a) zu bewegen;
eine Verarbeitungseinheit (600), die dazu geeignet ist:
zumindest eine erste Abfolge von Überprüfungen an einem ersten Reifen in einer ersten Zeitdauer auszuführen, gefolgt von einer zweiten Abfolge von Überprüfungen, die an einem zweiten Reifen in einer zweiten Zeitdauer ausgeführt werden;
den optischen Aufbau (430) anzutreiben, um eine erste Überprüfung (C1) an dem ersten Reifen auszuführen;
den optischen Aufbau (430) anzutreiben, um eine zweite Überprüfung (C2) an dem zweiten Reifen auszuführen;
wobei die erste Überprüfung (C1) und die zweite Überprüfung (C2) durch ein Zeitintervall (T1) getrennt sind, das kürzer als oder gleich der Summe der ersten Zeitdauer und der zweiten Zeitdauer ist;
wobei das erste optische Werkzeug (43a) während des Zeitintervalls (T1) nicht für die Überprüfung von Reifen verwendet wird;
wobei die Verarbeitungseinheit (600) dazu geeignet ist, das erste optische Werkzeug (43a) während des Zeitintervalls (T1) zu verifizieren.

13. Vorrichtung nach Anspruch 12, wobei die Verarbeitungseinheit (600) dazu geeignet ist, das erste Glied (40a) anzutreiben, um das erste optische Werkzeug (43a) zu bewegen, um das erste optische Werkzeug (43a) zu verifizieren.

14. Vorrichtung nach Anspruch 13, umfassend ein Referenzelement (300), wobei die Verarbeitungseinheit (600) dazu geeignet ist, das erste Glied (40a) zum Positionieren des ersten optischen Werkzeug (43a) in einer gegebenen Position relativ zu dem Referenzelement (300) anzutreiben, um das erste optische Werkzeug (43a) zu verifizieren.

15. Vorrichtung nach einem der Ansprüche 12 bis 14, wobei der optische Aufbau ein zweites optisches Werkzeug (43b) umfasst,
wobei das zweite optische Werkzeug (43b) während des Zeitintervalls (T1) nicht für die Überprüfung von Reifen verwendet wird,
wobei die Verarbeitungseinheit (600) dazu geeignet ist, das zweite optische Werkzeug (43b) während des Zeitintervalls (T1) zu verifizieren.

## Revendications

1. Procédé de gestion d'un appareil de contrôle de pneus, ledit appareil (1) comprenant :
une structure optique (430) pour ledit contrôle, ladite structure optique (430) comprenant au moins un premier outil optique (43a) ;
un premier élément (40a) adapté pour déplacer ledit premier outil optique (43a),
dans lequel ledit contrôle de pneus comprend au moins une première séquence de contrôles exécutée sur un premier pneu pendant une première durée, suivie d'une deuxième séquence de contrôles exécutée sur un deuxième pneu pendant une deuxième durée,
dans lequel ledit procédé comprend le fait :
d'exécuter, à travers ladite structure optique (430), un premier contrôle (C1) sur ledit premier pneu ;
d'exécuter, à travers ladite structure optique (430), un deuxième contrôle (C2) sur ledit premier ou deuxième pneu ;
dans lequel ledit premier contrôle (C1) et ledit deuxième contrôle (C2) sont séparés par un intervalle de temps (T1) inférieur ou égal à la somme de ladite première durée et de ladite deuxième durée ;
dans lequel ledit premier outil optique (43a) n'est pas utilisé pour le contrôle de pneus pendant ledit intervalle de temps (T1) ;
dans lequel ledit procédé comprend le fait de vérifier ledit premier outil optique (43a) pendant ledit intervalle de temps (T1).

2. Procédé selon la revendication 1, dans lequel la vérification dudit premier outil optique (43a) comprend le fait :
de positionner ledit premier outil optique (43a) dans une position donnée par rapport à un élément de référence (300) ;
de détecter, à travers ledit premier outil optique (43a), des rayonnements lumineux (W) représentant au moins une partie dudit élément de référence (300) ;
de faire une comparaison entre lesdits rayonnements lumineux détectés (W) et les données de référence (Ref) ;
de générer un signal de notification (NS) en fonction de ladite comparaison.

3. Procédé selon la revendication 2, dans lequel ledit élément de référence (300) comprend un écran (300a) adapté pour afficher des formes prédéfinies pour l'exécution de ladite vérification.

4. Procédé selon la revendication 2 ou 3, dans lequel le positionnement du premier outil optique (43a) dans ladite position donnée comprend le fait d'entraîner ledit premier élément (40a) de manière à ce que ledit premier outil optique (43a) sera placé dans ladite position donnée.

5. Procédé selon l'une quelconque des revendications 2 à 4, comprenant le fait d'exécuter une opération d'apprentissage (SL) pour apprendre la position dudit élément de référence (300) avant l'exécution dudit premier contrôle (C1).

6. Procédé selon les revendications 4 et 5, dans lequel ladite opération d'apprentissage (SL) comprend le fait :
d'entraîner ledit premier élément (40a) pour l'amener dans une position de sorte que ledit premier outil optique (43a) sera placé dans ladite position donnée par rapport audit élément de référence (300) ;
de stocker des données de position (PD), indiquant la position prise par ledit premier élément (40a), dans un support de stockage (610) associé audit premier élément (40a).

7. Procédé selon la revendication 6, dans lequel, pour vérifier ledit premier outil optique (43a), ledit premier élément (40a) est entraîné dans la position définie par lesdites données de position (PD).

8. Procédé selon l'une quelconque des revendications précédentes, dans lequel ladite structure optique (430) comprend un deuxième outil optique (43b),
dans lequel ledit deuxième outil optique (43b) n'est pas utilisé pour le contrôle de pneus pendant ledit intervalle de temps (T1) ;
ledit procédé comprenant le fait de vérifier ledit deuxième outil optique (43b) pendant ledit intervalle de temps (T1).

9. Procédé selon l'une quelconque des revendications précédentes, dans lequel ladite première durée est comprise entre environ 15 secondes et environ 120 secondes.

10. Procédé selon l'une quelconque des revendications précédentes, dans lequel ladite deuxième durée est comprise entre environ 15 secondes et environ 120 secondes.

11. Procédé selon l'une quelconque des revendications précédentes, dans lequel ladite première durée est essentiellement égale à ladite deuxième durée.

12. Appareil de contrôle de pneus, comprenant :
une structure optique (430) pour exécuter un ou plusieurs contrôle(s) sur des pneus (2), ladite structure optique (430) comprenant au moins un premier outil optique (43a) ;
un premier élément (40a) adapté pour déplacer ledit premier outil optique (43a) ;
une unité de traitement (600) adaptée :
pour exécuter au moins une première séquence de contrôles sur un premier pneu pendant une première durée, suivie d'une deuxième séquence de contrôles exécutée sur un deuxième pneu pendant une deuxième durée ;
pour entraîner ladite structure optique (430) afin d'exécuter un premier contrôle (C1) sur ledit premier pneu ;
pour entraîner ladite structure optique (430) afin d'exécuter un deuxième contrôle (C2) sur ledit deuxième pneu ;
dans lequel ledit premier contrôle (C1) et ledit deuxième contrôle (C2) sont séparés par un intervalle de temps (T1) inférieur ou égal à la somme de ladite première durée et de ladite deuxième durée ;
dans lequel ledit premier outil optique (43a) n'est pas utilisé pour le contrôle de pneus pendant ledit intervalle de temps (T1) ;
dans lequel ladite unité de traitement (600) est adaptée pour vérifier ledit premier outil optique (43a) pendant ledit intervalle de temps (T1).

13. Appareil selon la revendication 12, dans lequel ladite unité de traitement (600) est adaptée pour entraîner ledit premier élément (40a) pour déplacer ledit premier outil optique (43a) afin de vérifier ledit premier outil optique (43a).

14. Appareil selon la revendication 13, comprenant un élément de référence (300), ladite unité de traitement (600) étant adaptée pour entraîner ledit premier élément (40a) pour positionner ledit premier outil optique (43a) dans une position donnée par rapport audit élément de référence (300) afin de vérifier ledit premier outil optique (43a).

15. Appareil selon l'une quelconque des revendications 12 à 14, dans lequel ladite structure optique comprend un deuxième outil optique (43b),
dans lequel ledit deuxième outil optique (43b) n'est pas utilisé pour le contrôle pendant ledit intervalle de temps (T1),
dans lequel ladite unité de traitement (600) est adaptée pour vérifier ledit deuxième outil optique (43b) pendant ledit intervalle de temps (T1).
